Europäisches Patentamt

European Patent Office

Office européen des brevets

(11) Publication number: **0 414 695 B1**

# EUROPEAN PATENT SPECIFICATION

(45) Date of publication of patent specification: **04.10.95** (51) Int. Cl.6: **C01G 1/02**, C04B 33/02

(21) Application number: **89903821.0**

(22) Date of filing: **17.03.89**

(86) International application number:
**PCT/SE89/00145**

(87) International publication number:
**WO 89/08611 (21.09.89 89/23)**

(54) **CERAMIC POWDER AND A PROCESS FOR THE PREPARATION THEREOF.**

(30) Priority: **18.03.88 SE 8801006**

(43) Date of publication of application:
**06.03.91 Bulletin 91/10**

(45) Publication of the grant of the patent:
**04.10.95 Bulletin 95/40**

(84) Designated Contracting States:
**AT BE CH DE FR GB IT LI LU NL SE**

(56) References cited:
**EP-A- 0 186 149**
**US-A- 2 024 611**
**US-A- 4 368 582**

(73) Proprietor: **TECHNOLOGICAL INSTITUTE OF ICELAND**
**Keldnaholt**
**IS-110 Reykjavik (IS)**

(72) Inventor: **GUNNARSSON, Gudmundur**
**Skulagötu 60**
**IS-105 Reykjavik (IS)**

(74) Representative: **Bergvall-Eftring, Stina Lena et al**
**Dr. Ludwig Brann Patentbyra AB**
**P.O. Box 17192**
**S-104 62 Stockholm (SE)**

Rank Xerox (UK) Business Services
(3.10/3.09/3.3.3)

**Description**

The invention relates to a process for the production of ceramic powders of submicron particle size and low tendency for agglomeration, by supercritical drying and calcination.

During the last years an increasing interest has been directed to ceramic powders of submicron particle size, which are used as raw materials for advanced ceramics. Special emphasis has been given to powders with weak agglomerates (or aggregates), sometimes called agglomerate free powder, since it has been discovered that they have better sintering properties than powders with hard agglomerates. Powders with weak agglomerates give superior properties to the final product. It has also been found that the smaller the particle size of the powder the better are its sintering properties.

However the tendency to agglomerate formation increases when the particle size decreases, especially when the powder is produced with wet chemical methods. This is because when the powder is dried the powder particles are drawn to each other through capillary forces when the solvent evaporates. The smaller the particle size, the larger are the capillary forces which result in hard agglomerates, especially when the powder is calcined after drying, as often is the case with powders produced by wet chemical methods.

According to the state of the art oxide powders and mixed oxide powders are produced by precipitation of metal hydroxides or mixtures of metal hydroxides, which are obtained by the addition of a base, for example ammonia or sodium hydroxide, to a solution of metal salts. The hydroxide precipitate is thereafter filtered, washed and dried, whereafter it is calcined to the oxide or a mixture of oxides.

This method gives a powder which contains hard agglomerates after the calcination and which has to be milled in order to give a good powder. Even with milling it is difficult to obtain a powder with the desired properties. A large disadvantage with the milling is also the contamination from the milling media.

According to Patent Abstracts of Japan, volume 7, nr. 39 (C-151), (Abstract of JP 57-191234) it is known from an aqueous solution of a Zr salt to obtain ultrafine primary particles of zirconium oxide, containing little agglomerates and devoid of contamination with the precipitant and anions, through washing of the precipitate with water and treatment with an organic solvent.

The precipitate or Zr hydroxide is obtained according to this method by adding aqueous ammonia to an aqueous solution of a Zr salt. The precipitate is separated from the mother liquid by filtration, etc., and washed with water to completely remove the remaining solution in the precipitate and the unreacted materials or product attached to the precipitate. An organic solvent is added to the washed precipitate, and distilled in the state containing the precipitate dispersed in the solvent. Since the water causing the agglomeration of the primary particles can be removed from the precipitate, and the primary particles are dispersed in the organic solvent in a state as fine as possible, the agglomeration of the particles during the following drying and heating steps can be prevented.

From Patent Abstracts of Japan, volume 8, nr. 172 (C-237) Abstract of JP 59-69428 it is previously known to manufacture ultrafine powders of zirconium oxide by heating under pressure an aqueous solution containing zirconium carbonate, adding an organic solvent to the resulting zirconium oxide, removing water by distillation under heating and drying the product.

According to this process an alkaline aqueous soln. contg. zirconium carbonate or a slightly acidic or alkaline soln. prepared by suspending or partially dissolving zirconium hydroxide in said aqueous soln. is reacted in an autoclave at $\geq$ 130°C, preferably about 170 -220°C under $\geq$ 2 kg/cm$^2$, preferably about 5 - 40 kg/cm°C gauge pressure to form zirconium oxide. An org. solvent is added to the zirconium oxide, and water is removed by distillation during heating. The preferred org. solvent is xylene or the like having $\geq$ about 110°C b.p. The solvent is separated after the distillation, and the residue is dried to an ultrafine powder of zirconium oxide having $\leq$ about 200 Å uniform particle size.

DE-OS 34 95 948 relates to a ceramic aluminium oxide/zirconium oxide powder the sinterability of which is improved by preventing agglomeration during the pretreatment of the powder through the use of a freeze drying process. Freeze drying is however dissatisfying since after calcination of the freeze dried powder, it has to be milled and freeze dried again to obtain a powder with improved sintering properties.

It is also known from USP 4 619 908 and High Tech Materials Alert, vol. 4, october (1987), R. Ayen et al. known to produce amorphous metal oxides of high purity from slurries and gels by using supercritical carbon dioxide, a gas with almost fluid density and exceptional solvation capacity.

As distinguished from other extraction technologies the supercritical fluid does not result in an agglomeration of the powder or the collapse of its pores. This method is used for the production of powders of aluminium oxide, silicon oxide, titanium oxide, yttrium oxide and zirconium oxide. However this process has the disadvantage of requiring drying at 80 - 100°C in order to be able to remove water from the powder, since use of $CO_2$ in a supercritical state is very ineffective for removing water.

According to Advances in Ceramics vol. 21, "Ceramic Powder Science" Am. Cer. Soc., Colombus, (1987), p. 109 - 120, D.W. Matson et al. a new process for production of fine ceramic powders through rapid expansion of supercritical fluid solution (RESS) is known. Rapid loss of solvent density occurs as the fluid is expanded through a nozzle from a high-temperature and pressure regime to a low - pressure environment. This is a continuous process according to which large quantities of solvent have to be removed.

From S.S. Kistler "Method of producing aerogels" USP 2093 454 it is known that by supercritical drying one can produce very porous gels consisting of silica or other inorganic oxides or hydroxides.

From R.A. Laudise och D.W. Johnson "Supercritical drying of gels", J. Non-Crysta Solids, 79 (1986), 155-164 it is previously known that by supercritical drying one can produce crack-free, dry, silica gels.

From W.J. Schmitt, R.A. Grieger-Block and T.W. Chapman, "The preparation of acid-catalysed silica aerogels". Chemical Engineering at Superctirical Fluid Conditions", Paulitis et al., Ann-Arbor, Michigan, 1986, p. 446-460, it is known how to produce highly porous silica aerogels which are transparent and good thermal insulators. The aerogel was created by the acid - catalysed hydrolysis of ethyl silicate in an alcoholic medium and dried supercritically in an autoclave.

From P.H. Tewari et al. "Ambient temperature supercritical drying of transparent silica aerogels", Mat. Letters 3, (1985), 363 - 367 a new technique to supercritically dry alcogels to transparent silica aerogels is described. This supercritical drying occurs at $\leq 40°C$ instead of at $\leq 270°C$ by substituting liquid $CO_2$ for the alcohol in the alcogel.

The aim of the supercritical drying of the gels is generally to obtain very porous, crack-free, transparent gels, which for instance can be used as starting materials for glass, for example optical fibers and as transparent thermal insulators in window glass.

From United States Patent 4 368 582 a process for drying finely divided pigments contained in a press cake of a suspension, is previously known, wherein a mixture of the pigment and a liquid, the critical temperature of which is below the decomposition temperature of the pigment, is heated under pressure to above the critical temperature of the liquid and is then released while keeping the temperature above the dew line of the liquid. The process gives fine pigment powders which are easily dispersible in the media in which the pigments are used, and which produce deep, brilliant colorations.

From United States Patent 2 024 611 a process for drying of an inorganic pigment is known according to which wet pigment in a closed chamber is exposed to a pressure considerably in excess of the atmospheric pressure at a temperature approximately corresponding to that of superheated steam at the prevailing pressure, wherafter heat is applied while steam is vented until the moisture content of the pigment is substantially reduced.

However, it was not obvious to those skilled in the art, with knowledge of the United States Patents 4 368 582 and 2024 611, in the production of ceramic powders, the composition and properties of which essentially differ from the composition and properties of pigments, that by using water and/or a solvent in an amount exceeding the critical fill, and heating to a pressure and temperature exceeding the critical point of the mixture, a ceramic powder is obtained, which after calcination, pressing and sintering gives test specimens with a density in the range of 96% - 99% of theoretical density, as is shown in the enclosed examples.

EP 186 149 is directed to a method of preparing inorganic oxide-containing aerogels in particular in the form of granular material, characterized by a high surface area and pore volume. The preparation comprises dissolving the inorganic alkoxide or metal salt in a solvent optionally containing a catalytic amount of an acid or base and hydrolysing the metal compound which is then further treated with a fluid at or above its critical temperature and pressure to extract the solvent. The aerogels act as a support material for catalysts.

The ceramic powders produced according to the present invention have very good sintering properties for powders of submicron particle size and especially powders which prior to calcination have a particle size below 0,1 $\mu$m.

Through supercritical drying and calcination, a ceramic powder is produced with submicron particle size and insignificant agglomerate formation. The aim of the supercritical drying is to eliminate the effects of capillary forces when drying, which otherwise would give hard agglomerates, particularly when the powder is calcinated. The aim of the calcination step may i.a. be one or more of the following.

1) The quantity of the remaining salt in the powder, for example ammonium chloride or ammonium nitrate, or organic material, which otherwise could deteriorate the powder properties is minimised.

2) Control of the particle size of the powder. Through calcination the particle size of the powder can be increased. In this way a powder of different particle sizes can be produced.

3) Crystallisation of the powder. After the supercritical drying the powder can be amorphous or of an undesired crystalline phase, which can necessitate calcination in order to obtain crystalline powder of the desired phase.

4) Dehydration of the powder. After the supercritical drying the powder can contain water as a hydroxide, which can necessitate calcination to produce a water free powder.

The supercritical drying is performed by heating a slurry of metal oxides, metal hydroxides or mixtures thereof in water and/or an organic solvent, to a pressure and temperature, which exceeds the critical point for the solvent or solvent mixture, wherafter the pressure is reduced.

The calcination is performed by heating the powder after supercritical drying in a furnace. The calcination temperature and time is determined through experiments so that one or more of the above mentioned effects are reached. The calcination temperature can differ significantly from one material to another and even for one and the same material if e.g. powders of different particle sizes are to be attained.

Powders dried with the supercritacal method are partially or totally dehydrated, free flowing and can be calcinated without excessive formation of hard agglomerates. Optional milling required after calcination is therefore at a minimum.

Supercritical drying can be applied to all slurries containing partially or totally dehydrated solid material, water or organic solvents. Supercritical drying with subsequent calcination is particularily advantageous for powders which before calcination have a particle size smaller than 0,1 $\mu$m.

According to the invention a mixture of a powder and a solvent (or solvent mixture) is heated in an autoclave until the temperature and pressure exceed the critical temperature and pressure for the solvent (or solvent mixture) as used whereby the interphase, and thus the capillary forces, between liquid and vapour are eliminated. The quantity of solvent in the autoclave ($m_s$) must exceed the critical fill ($m_{sc}$), which is defined according to $m_{sc} = (V_a - V_p) d_c$, where $V_a$ is the volume of the autoclave, $V_p$ the volume of the powder and $d_c$ the density of the solvent at the critical point. As an example we can take methanol with $d_c$ = 0,272 g/cm$^3$ and water $d_c$ = 0,323 g/cm$^3$. Data from Perry och Green; "Perry's Chemical Engineers Handbook", 6th edition, Mc Graw Hill, New York, 1984, p. 3-111 and 3-112). For an 1 l autoclave the critical fill for methanol is 272 g and for water 323 g, provided the volume of the powder is neglected. The quantity of solvent in the autoclave must exceed the critical fill to prevent complete vapourisation of the solvent before the critical point is reached so that the solvent is completly wetted just under the critical point. The pressure is then reduced to atmospheric pressure while the temperature is kept above the critical temperature for a time sufficient to prevent condensation of the solvent in the autoclave. This can for example be accomplished by opening a valve and allowing the solvent to escape. The optional residues of solvent in the autoclave can be removed by drying under vacuum or by blowing an inert gas through the solid material.

Precipitates which can be dried by supercritical drying are produced in an economic manner by mixing a base, preferably during stirring, such as ammonia and/or sodium hydroxide with an aqueous solution of metal salts to precipitate the hydroxides. The metal salt solution can be a solution of a single metal salt or a mixture of metal salts and the precipitation can be made by addition of the base to the metal salt or vice versa. The precipitation can also be performed by mixing the base and the salt solution at constant pH.

The final pH after the precipitation is determined so that complete or almost complete precipitation of all metals in question is accomplished. After the precipitation the hydroxide precipitate is washed with water to remove most of the salt therefrom. There is no need to remove all of the salt from the precipitate if it can be removed in the subsequent calcination step or if the remaining salt does not have a negative effect on the properties of the powder.

When the salt is washed out of the precipitate the precipitate is mixed with water and heated in an autoclave until the temperature and pressure exceed the critical point of water. The quantity of water in the autoclave must exceed the critical fill so the critical pressure can be reached at the critical temperature. When the temperature and pressure have risen above the critical point the pressure is reduced, for example by opening a valve, to atmospheric pressure while the temperature is kept above the critical temperature sufficiently long to prevent condensation of water in the autoclave.

Finally, the optional remaining amounts of water can be removed by blowing an inert gas through the precipitate or the water can be removed by applying vacuum. In most cases the hydroxide precipitate is partially or totally dehydrated according to the above described process. The product is therafter removed from the autoclave wherafter it is calcined.

Water has a critical temperature, $T_c$, of 374°C and a critical pressure, $P_c$, of 218 bar (data from Perry). Supercritical drying from water therefore requires the use of expensive autoclaves. If the powder is precipitated from water, it can be advantageous if the water is removed from the precipitate through filtration (or other methods of separation) and if the precipitate is washed with a solvent of lower critical temperature and a lower critical pressure than the corresponding temperature and pressure for water, as for example methanol ($T_c$ = 240°C $P_c$ = 78,7 bar), (data from Perry). Other suitable solvents are for example ethanol, n-propanol and iso-propanol.

4

The washed precipitate, containing residues of water and solvent, is thereafter slurried in the solvent to give a mixture the solvent mixture content of which exceeds the critical fill. The mixture is thereafter heated until the critical point for the solvent mixture is exceeded, wherafter the pressure is reduced as described above. In certain cases, the solid substance can dehydrate when it is heated in the above mentioned manner and in that way contribute to the mixtures water content of the mixture.

Information about the critical temperature, the critical pressure and the critical fill of solvent mixtures is very limited. One can therefore not be sure when the supercritical state for the mixture is obtained. In lack of experimental data, critical data for mixture are sometimes estimated according to the following formula $U_c = \Sigma\ f_i U_{ic}$ where $U_c$ is a critical parameter for the mixture, $U_{ic}$ critical parameters for the indicidual components and $f_i$ the weight fractions of the individual components. This method has for example been used by Prassas, Phalippou and Zarzycki. (J. Mater, Sci. 19 (1984), p. 1656 - 1665) for calculation of critical parameters, for water - methanol mixtures. In the present invention critical data for mixtures are estimated according to this method. In the drying of powders, mixed with solvent mixtures, according to the supercritical method, the temperature and pressure are increased over the values determined according to the above method. The fill of the autoclave used for the drying exceeds also what is calculated with the above method.

It is also possible, when the salt has been washed out, to wash the precipitate with an organic solvent which forms an azeotrop with water as for example n-propanol, or wash the precipitate with a solvent with a higher boiling point than water, as for example xylene, mix the precipitate with the organic solvent and remove the remaining water from the mixture through distillation. During the distillation the hydroxide precipitate can dehydrate and thereby contributes to the water that is removed during the distillation. When the water has been removed the mixture can be dried according to the supercritical method according to the invention. It is also possible to separate the solvent, for example xylene, from the precipitate whereafter it is washed and/or mixed with another solvent as for example methanol and dried supercritically. In addition to hydroxides it is possible to dry oxides according to the supercritical method. Oxides for drying according to the supercritical method can for example be produced with hydrothermal methods whereby a mixture of metal hydroxide and water, and optionally other compounds, can be heated in an autoclave under conditions resulting in the formation of an oxide from a hydroxide. An example of such a process is described in Patent Abstracts of Japan, vol. 8, nr. 172 (C-237), Abstract of JP 59-69428. If the product from the autoclave contains salt it is washed out of the oxide. Thereafter the precipitate is washed with an organic solvent, mixed with an organic solvent, whereafter it is dried supercritically. Before drying with the supercritical method it is also possible to remove the water through distillation.

Mixtures of oxides and hydroxides can also be dried according to the supercritical method. This can for example be accomplished by first producing an oxide, for example zirconium oxide, by a hydrothermal method, whereafter the oxide slurry is mixed with a metal salt at low pH, e.g. zirconium oxide can be mixed with aluminium chloride, whereafter a base, for example $NH_3$ or NaOH, is added in order to obtain a mixture of hydroxide and oxide. Salt is washed out of the precipitate whereafter it can be dried according to the supercritical method. For example from a mixture of zirconium oxide and aluminium hydroxide one can in this way produce a mixture of zirconium oxide and aluminium oxide monohydrate (AlOOH).

It is obvious to a man skilled in the art that other methods also can be used for the production of mixtures of metal hydroxides and/or metal oxides and water and/or organic solvents. The mixture is preferably free flowing.

After the supercritical drying the powder is calcined as mentioned above. The calcination temperature and calcination time depend on the effect to be accomplished and the material as calcined. As an example, AlOOH can be mentioned, which can be produced by supercritically drying a mixture of aluminium hydroxide, methanol and water. If one wants to produce $Al_2O_3$ with a particle size as small as possible AlOOH is calcined at the lowest temperature, ca. 500 °C, that gives $Al_2O_3$ from AlOOH. Larger particles can then be produced by calcination at a higher temperature. If the calcination temperature is to high it results in the formation of agglomerates. The highest permissable calcination temperature is determined by the material and must be determined through experiment. Calcination of titanium hydroxide gives at normal temperatures powders without hard agglomerates if it is dried according to the supercritical method, but give hard agglomerates at 1000 °C while AlOOH calcined at 1000 °C does not contain hard agglomerates.

The raw materials used for the production of the ceramic powders are preferably aqueous solution containing metal salts, which can be obtained by any known method, such as those described below. In some cases aqueous solutions of metal salts are available on the market. This is for example the case with aqueous solutions of zirconium oxychloride, zirconium acetate, aluminium chloride and others. Aqueous solutions of metal salts can be produced by dissolving water soluble metal salts in water. Metal salts which can be used for this purpose are for example $ZrOCl_2 \cdot 6H_2O$ and $ZrO(NO_3)_2 \cdot 2H_2O$ for the production of zirconium hydroxide and zirconium oxide, $AlCl_3 \cdot 6 \ H_2O$ and $Al(NO_3)_3 . 9H_2O$ for the production of aluminium hydroxide and aluminium oxide, rare earth metals chlorides and nitrates for the production of rare earth metal hydroxides and oxides. Aqueous solutions of metal salts can also be obtained by dissolving anhydrous chlorides, as $ZrCl_4$, $TiCl_4$ and $SnCl_4$ in water and by dissolving metal hydroxides, such as zirconium hydroxide, aluminium hydroxide and titanium hydroxide in acids, for example hydrochloric acid or nitric acid. Certain oxides, as $Gd_2O_3$ and $Y_2O_3$ and others, and certain metals, as aluminium and others can also be dissolved in acids to obtain an aqueous solution of metal salts. Other known methods for the production of aqueous solutions of metal salts can also be used.

From aqueous solutions of metal salts metal hydroxides, such as zirconium hydroxide, titanium hydroxide, aluminium hydroxide, hafnium hydroxide, yttrium hydroxide and other rare earth metal hydroxides etc., as well as mixtures of hydroxides, can be produced by any known method, for example by precipitation with a base as ammonia or sodium hydroxide. The precipitation can be carried out by the addition of a base to the metal salt solution, or by addition of a metal salt solution to the base, or by the mixing of a metal salt solution and a base at constant pH, or in other ways. The pH after the precipitation should be so that a quantitative precipitation of all of the metal ions in the solution in the form of metal hydroxides is brought about. For e.g. titanium hydroxide, zirconium hydroxide, yttrium hydroxide and other rare earth metal hydroxides the pH should be > 7 (larger than 7). For other metal hydroxides the pH should be within a certain range, e.g. the pH for aluminium hydroxide at the end of the precipitation should be 5 - 9. For each metal hydroxide the pH should thus be chosen so that almost quantitative precipitation of the metal hydroxide, or mixture of metal hydroxides, is brought about.

After the precipitation of metal hydroxides salt is washed out the precipitate with water, e.g. in a filter press. The precipitate as obtained can be mixed with water to a mixture of metal hydroxides and water. When the salt has been washed out of the precipitate also the metal hydroxide can be washed with an organic solvent and thereafter mixed with an organic solvent to a mixture of metal hydroxide, water and one or more organic solvent, Suitable organic solvents for this purpose are the lower alcohols, methanol, ethanol and propanol.

It is also possible to slurry the precipitate after the filtration and washing in an organic solvent which has a higher boiling point than water, such as xylene, or which forms an azeotrop with water, such as n-propanol, whereafter the water is distilled. After the distillation the remaining slurry can be dried with the above described supercritical method or most of the solvent can be separated from the hydroxide, for example through filtration, whereafter the wet precipitate is mixed with another organic solvent to obtain a mixture of metal hydroxide and one or more organic solvents. At the distillation the metal hydroxide can partly or totally dehydrate. If the distillation for example is performed with xylene, some xylene can be filtered from the precipitate, whereafter the precipitate optionally is washed with methanol and finally mixed with methanol so that a mixture of metal hydroxide, xylene and methanol is obtained.

As mentioned above not only metal hydroxides but also mixtures of metal oxides and mixtures of metal hydroxides and metal oxides can be dried with the supercritical method. Oxides for drying according to the supercritical method can be produced by any known method, for example hydrothermal synthesis and mixtures of metalhydroxides and metal oxides can be produced by any known method, for example by mixing of a hydrothermally produced oxide with a solution of metal salt followed by precipitation with any known method, for example by precipitation with ammonia. The metal oxides or mixtures of metal oxides and metal hydroxides as obtained can be treated as described above for the metal hydroxides to obtain a mixture of metal oxide and/or metal hydroxides, water and/or one or more organic solvents.

In addition to the methods described above for the production of mixtures of fine, grained metal hydroxides and/or metal oxides, water and/or one or more organic solvents, any known method for the production of the above mixtures can be used. The particle size of the powder which is dried according to the supercritical method is preferably less than 0,1 $\mu$m.

The supercritical drying can be accomplished with mixtures which contain 10-2000 g of solid material, preferably 50 - 1000 g, most preferably 100 - 300 g (metal hydroxide and/or metal oxide) per liter solvent.

As mentioned above the solvent can be water and/or one of more organic solvents, such as methanol, ethanol and n-propanol, iso-propanol, xylene, and others. The critical temperature and pressure for the organic solvent as used is lower than the critical temperature and pressure for water, preferably lower than 360°C and 200 bar and its critical temperature is preferably higher than 100°C.

The mixture of powder and solvent, or solvent mixture, is thereafter heated to a temperature and pressure which lies in a region that exceeds the critical temperature and pressure for the solvent as used. Critical data for some solvents according to the invention are shown in table I.

Table I

| Critical temperature ($T_c$), pressure ($P_c$) and density ($d_c$) for some solvents according to the invention and the critical fill ($m_{sc}$) of these per liter autoclave volume. | | | | |
|---|---|---|---|---|
| Solvent | $T_c(°C)$ | $P_c$ (bar) | $d_c$ (g/cm$^3$) | $m_{sc}$ (g) |
| Water | 374,15 | 218,4 | 0,323 | 323 |
| Methanol | 240,0 | 79,7 | 0,272 | 272 |
| Ethanol | 243,1 | 63,1 | 0,2755 | 275,5 |
| n-propanol | 263,7 | 49,95 | 0,273 | 273 |
| Isopropanol | 235,0 | 53,0 | | |
| n-butanol | 287 | 48,4 | | |
| Benzene | 288,5 | 47,7 | 0,304 | 304 |
| Toluene | 320,6 | 41,6 | 0,292 | 292 |
| Data from "Perry's Chemical Engineers Handbook, 6th ed. | | | | |

Since the critical point is not known for all conceivable solvent combinations which can be used according to the invention it rests on a person skilled in the art to determine the critical point for the solvent in question. This can be done theoretically as described on page 8.

A sufficient quantity of solvent must be present in the autoclave to prevent complete vapourisation of the solvent in question before the critical point has been reached and to make it possible for the solid material to be completly wetted just below the critical point. Those skilled in the art call it the critical fill. The pressure in the autoclave is thereafter reduced to atmospheric pressure while the temperature is kept above the critical temperature sufficiently long to prevent condensation of the solvent in the autoclave. This is accomplished by opening a valve in the autoclave whereby the solvent or solvent mixture escapes while the solid material remains in the autoclave. Optional residues of solvent can be removed by drying under vacuum or by blowing an inert gas through the solid material.

The solid material is removed from the autoclave and calcined. The calcination temperature and time are determined by the effect one wishes to achieve with the calcination, as mentioned above. After calcination the powder is ready for forming and sintering. It can, however, be advantageous to subject the powder to further treatment steps, such as deagglomeration, which removes the few agglomerates which can yet be present in the powder. It can also be advantageous to increase the bulk density of the powder.

The invention is illustrated in more detail by the following examples.

## Example 1

A mixture of zirconium and yttrium hydroxides, calculated to give 3 mole percent $Y_2O_3$ in $ZrO_2$, was precipitated with concentrated ammonia from a zirconium oxychloride/yttrium chloride solution with a concentration of 56 g/l (calculated as oxide). The pH during the precipitation was kept constantly at 9,3 ±0,1. Chloride ions were washed out of the precipitate with distilled water in a filter press until no chloride ions could be detected in the filtrate with the silver nitrate test. Thereafter a part of the precipitate was washed with n-propanol and slurried in n-propanol, whereafter water was distilled of the precipitate in azeotropic distillation. n-Propanol was added to the slurry during the distillation to prevent drying of the precipitate. The distillation was stopped when the temperature had reached 97 °C and the density of the solvent was 0,804 g/cm$^3$. The boiling point and density of pure n-propanol are 97,8 °C and 0,804 g/cm$^3$. The slurry was then diluted with n-propanol to a volume of ca. 1 l, whereatfer it was placed in a 2 l autoclave and heated (without stirring). Some values for temperature and pressure during heating are shown below.

| Time from start of heating (min) | Temp. ° C | Pressure bar |
|---|---|---|
| 75 | 200 | 10 |
| 114 | 232 | 32 |
| 119 | 250 | 42 |
| 133 | 257 | 50 |
| 140 | 264 | 60 |
| 150 | 275 | 80 |
| 157 | 281 | 90 |
| 164 | 292 | 110 |
| 172 | 305 | 130 |

When the temperature had reached 305°C a valve was opened and the solvent vented. The temperature during the venting of the solvent was kept above 305°C. The solvent vented was cooled and collected. Totally 900 ml were collected with a density of 0.805 $g/cm^3$. The last residues of the solvent were removed with a vacuum pump at 300 - 350 °C. The product from the autoclve was a fluffy powder with a bulk density of 0,15 $g/cm^3$. The pore volume of pores with a diameter up to 300 - 400 Å was measured to be 0.82 $cm^3/g$ with nitrogen adsorption. With mercury porosimetry the volume of pores with 50 -500 Å diameter was measured to be 0,47 $cm^3/g$ and the volumes of pores with 500-1000 Å diameter to be 0,2 $cm^3/g$. The specific surface area of the powder was 196 $m^2/g$ and XRD diagrams showed very broad peaks at the same locations as for cubic zirconia. By calcination for 1 h at 1000°C the specific surface area decreased to 30 $m^2/g$. After calcination at 1000 °C the powder had the same peaks in XRD spectra as tetragonal zirconium oxide.

For sintering studies 5 disks, 13 mm in diameter, were pressed out of the calcined powder under a pressure of 70 MPa. Ca. 0,5 g of the powder was used for each disk. The disks were then heated to 1300°C with a heating rate of 300°C/h and kept at 1300 °C for 1 h, whereafter the furnace was cooled over night to room temperature. The density of the disks was then measured with Archimedes method, The average density was found to be 6,01 $g/cm^3$, which is 98,9 % of theoretical density. Here we have assumed a theoretical density of 6,08 $g/cm^3$ for zirconium oxide with 3 mol percent yttrium oxide, which consists of tetragonal phase to 100%.

Example 2

A mixture of zirconium and yttrium hydroxides, calculated to give 3 mole percent yttria in $ZrO_2$, was produced as in example 1. When the chloride ions had been washed out of the filtrate as described in example 1, the filter cake was washed with methanol and slurried in methanol, whereafter it was placed in a 20 l autoclave. The volume of the slurry was ca. 10,5 liters. Oxygen was rinsed out of the autoclave with nitrogen, whereafter a nitrogen gas pressure of 15 bar was placed on the autoclave. Thereafter the slurry was heated with stirring. When the temperature had reached 250°C, the stirrer was stopped while heating was continued. Some values for temperature and pressure during heating are shown below.

| Time from start of heating (min.) | Temp. (°C) | Pressure (bar) |
|---|---|---|
| 50 | 83 | 20 |
| 71 | 125 | 25 |
| 100 | 200 | 60 |
| 135 | 250 | 135 |

On minute 135 venting of solvent started by keeping the pressure at 130 - 140 bar while the temperature was increased to 350 °C whereafter the pressure was reduced to atmospheric pressure. The solvent was cooled and collected. During the venting the density of the solvent was measured (at room temperature). Some values for temperture, pressure, volume of solvent vented and density are shown below.

| Time (min.) | Temp. (°C) | Pressure (bar) | Volume (l) | Density of solvent (g/cm$^3$) |
|---|---|---|---|---|
| 155 | 260 | 140 | 1,4 | 0,83 |
| 160 | 262 | 140 | 2,0 | 0,83 |
| 166 | 265 | 142 | 2,5 | 0,83 |
| 178 | 267 | 138 | 4,0 | 0,83 |
| 210 | 271 | 135 | 6,0 | 0,83 |
| 280 | 356 | 139 | 8,0 | 0,84 |
| 323 | 352 | 105 | 9,0 | 0,86 |
| 381 | 360 | 50 | 10,0 | 0,91 |

Totally 10,3 l of solvent were collected during the venting.

Small quantities of powder came out with the solvent, especially at the beginning of the venting. When the pressure had been reduced to atmospheric pressure, a vacuum pump was connected to the autoclave. With the vacuum pump the last residues of solvent were removed. Totally 20 ml of solvent were collected with the vacuum pump. The product from the autoclave (totally 1580 g) was a fluffy powder with a bulk density of 0,2 g/cm$^3$, which contained some weak lumps which fell apart upon handling. After drying the specific surface area of the powder was 109 m$^2$/g, but after calcination for 2 hours at 1000°C it decreased to 20 m$^2$/g. After calcination for 2 hours at 1000°C, XRD diagram of the powder showed the same peaks as tetragonal zirconium oxide with a small quantity of monoclinic zirconium oxide. The content of tetragonal phase was estimated to be 92 volume percent and the content of monoclinic phase 8 volume percent, according to a method described by Garvie and Nicholson (J.Am.Chem. Soc. **55** (1972) 303 - 305).

The sintering properties of the calcined powder were studied as in example 1. After 1 hour sintering at 1300 °C, disk which contained no open porosity was obtained. The density of the disks was measured to be 95,6 % of theoretical density with Archimedes method. The disks were then heated to 1400 °C and kept at that temperature for 1 hour. After cooling the density of the disks was measured to be 97,4 % of theoretical density.

Example 3

A mixture of zirconium- and cerium(III) hydroxide was precipitated with concentrated ammonia from a solution of zirconium oxychloride and cerium nitrate, with a compostion corresponding to 12 mole percent CeO$_2$ in ZrO$_2$. The volume used of the Zr$^{3+}$/Ce$^{3+}$ solution was 40 l and the concentration, as oxide (ZrO$_2$ and CeO$_2$), 58 g/l. pH after the precipitation was 9,3. The precipitate was thereafter washed with distilled water until no chloride ions could be detected in the filtrate by a silver nitrate test. 13 l of the slurry were added to a 20 liter autoclave and oxygen rinsed from the autoclave as described in example 2, whereafter a nitrogen gas pressure of 10 bar was applied on the autoclave. Thereafter the slurry was heated under stirring. When the temperature had reached 207°C and the pressure 82 bar, the stirrer was stopped. When the temperature had reached 272°C and the pressure 130 bar, venting of the solvent started. The pressure was then controlled at 130 -140 bar by opening and closing a valve while the temperature was increased to 300°C. Thereafter the pressure was reduced to atmospheric pressure. The fluid mixture from the autoclave was cooled and collected. The total volume of liquid from the autoclave was 12,7 liter and its average density 0,87 g/cm$^3$. The last residues of solvent were removed with a vacuum pump.

The solid product from the autoclave was a fluffy powder (1695 g) (bulk density 0,2 g/cm$^3$), which through X-ray diffraction (XRD) showed the same peaks as cubic zirconium oxide. Its specific surface area, measured according to the single point BET method, was 120 m$^2$/g, After calcination for one hour at 1000°C the sample showed the same peaks in XRD-diagram as tetragonal zirconium oxide, with a minor quantity of monoclinic phase (27 %). The specific surface area after calcination was 34 m$^2$/g.

The sintering properties of the calcined powder were studied as in example 1. After 1 hour sintering at 1300 °C, disks which contained no open porosity were obtained. The density of the disks was measured to be 96,3 % of theoretical density with Archimedes method, if one assumes that the density of zirconium oxide with 12 mole percent cerium oxdie is 6,26 g/cm$^3$. The disks were then heated to 1400 °C and kept at that temperature for 1 hour. After cooling the density of the disks was measured to be 98,8 % of theoretical density.

**Example 4**

A chloride free precipitate, consisting of a mixture of zirconium and yttrium hydroxide with a composition which should give 3 mole percent yttria $Y_2O_3$ in $ZrO_2$, was produced as in example 1. The filter cake from the filter press was placed in a container made of Hastalloy C-4, which fitted in a 20 l autoclave. Water was poured over the cake to a total volume of ca. 10 liter, whereafter the mixture was heated, in a 20 l autoclave, to 250°C for 2 - 3 hours. By this treatment very fine cubic $ZrO_2$ crystals were formed, which contained a solid solution of $Y_2O_3$. After the autoclave treatment the precipitate was washed with methanol and slurried in methanol to a volume of 11-12 liter. The slurry was again placed in the autoclave, wherafter a nitrogen gas pressure of 65 bar was applied on the autoclave. Thereafter the autoclave was heated without stirring. When the temperature had reached 211°C and the pressure 140 bar venting started. The solvent was cooled and collected. During venting the pressure was kept at 130-140 bar while the temperature was increased to 315°C, whereafter the pressure was reduced to atmospheric pressure, but the temperature kept at 300-320 °C. At the beginning of the venting, some powder came out with the solvent. Totally 11,2 liters of solvent were collected, which had a density of 0,84 $g/cm^3$. The product from the autoclave (totally 450 g) was a fluffy powder with a bulk density of 0,22 $g/cm^3$. The volume of pores with a pore diameter up to 300-400 Å was measured to be 0,59 $cm^3/g$ with nitrogen gas adsorption. With mercury porosimetry the volume of pores with pore diameter 50-500 Å was measured to be 0,38 $cm^3/g$ and the volume of pores with pore diameter 500-1000 Å to 0,12 $cm^3/g$. The specific surface area of the powder was 95 $m^2/g$. After calcination for 1 hour at 1000°C the sample showed the same peaks in XRD-diagram as tetragonal zirconium oxide, with a minor quantity of monoclinic phase. The specific surface area after calcination was 25 $m^2/g$.

The sintering properties of the calcined powder were studied as in example 1. After 1 hour sintering at 1300 °C, disks without open porosity were obtained. The density of the disks was measured to be 98,2 % of theoretical density with Archimedes method. The disks were then heated to 1400 °C and were kept at that temperature for 1 hour. After cooling, the density of the disks was measured to be 99,1 % of theoretical density.

A comparative example (according to Patent Abstracts of Japan, volume 7, nr. 39 (C-151), abstract of JP 57-191234).

Water was removed from a chloride free zirconium-/yttrium hydroxide precipitate as described in example 1. The composition of the precipitate was the same as in example 1. After distillation, n-propanol was filtered from the precipitate, wherafter the precipitate was dried at 110°C overnight. After drying the specific surface areas of the powder was 350 $m^2/g$ and XRD-diagram showed that the powder was amorphous. After 2 h calcination at 1000°C XRD-diagram of the powder showed the same peaks as tetragonal zirconium oxide with a minor quantity of monoclinic phase. The monoclinic phase content was estimated to 8 %, with the method described by Garvie and Nicholsson. (J.Am.Chem.Soc. <u>55</u> (1972), 303-305). After the calcination the specific surface area of the powder was 23 $m^2/g$.

The sintering properties of the calcined powder were studied as in example 1. After 1 hour sintering at 1300 °C, the disks were very porous and consequently their density could not be measured with Archimedes method. The disks were therefore sintered again at 1400 °C, but even after sintering at this high temperature the disks were still porous, which shows that that the powder after calcination at 1000°C has poor sintering properties, as compared to powder dried according to the supercritical drying method and calcined at 1000°C. The density of the disks was estimated to be 5,3 $g/cm^3$, which is only 87 % of full density.

**Claims**

1. A process for the production of ceramic powders to be used as precursor for making sintered bodies, which ceramic powders have submicron particle size and low tendency to form agglomerates, <u>characterized</u> in heating a slurry of metal hydroxides, metal oxides and/or mixtures thereof in a quantity of water and/or solvent, which exceeds the critical fill, to a pressure and temperature that exceeds the critical point of the mixture wherafter the pressure is reduced to atmospheric pressure while the temperature is kept above the critical temperature sufficiently long to prevent condensation of the solvent in the autoclave, wherafter the powder is calcined, and processed into sintered bodies.

EP 0 414 695 B1

**2.** A process according to claim 1, <u>characterized</u> in that the metals are chosen from groups II-VI, groups VIIB and VIII of the periodic table.

**3.** A process according to claim 1 or 2, <u>characterized</u> in that the metal is zirconium.

**4.** A process according to claim 1 or 2, <u>characterized</u> in that the metal is aluminium.

**5.** A process according to claim 1 and 3, <u>characterized</u> in that the powder as produced mainly is zirconium oxide.

**6.** A process according to claim 1 and 4, <u>characterized</u> in that the powder as produced is aluminium oxide.

**7.** A process according to claim 1, <u>characterized</u> in that the solvent as used is a lower alcohol.

**8.** A process according to claim 1, <u>characterized</u> in that the mixture of metal hydroxides and/or oxide and water and/or organic solvent is free flowing.

**9.** A process according to claim 1, <u>characterized</u> in that the mixture contains 10-2000 g of metal hydroxide and/or oxide per liter solvent.

**10.** A process according to claim 1, <u>characterized</u> in that the calcination of the dried powder is carried out at 500-1500 ° C.

**Patentansprüche**

**1.** Verfahren zur Herstellung von Keramikpulvern zur Verwendung als Vorstufe bei der Herstellung von Sinterkörpern, wobei die Keramikpulver Teilchengrößen im Submikron-Bereich und eine geringe Tendenz zur Bildung von Agglomeraten aufweisen, gekennzeichnet durch das Erwärmen einer Aufschlämmung von Metallhydroxiden, Metalloxiden und/oder Mischungen davon in einer Menge an Wasser und/oder Lösungsmittel, welche die kritische Füllmenge überschreitet, auf einen Druck und eine Temperatur, welche den kritischen Punkt der Mischung übersteigt, wonach der Druck auf Atmosphärendruck reduziert wird, während die Temperatur ausreichend lang über der kritischen Temperatur gehalten wird, um die Kondensation des Lösungsmittels im Autoklaven zu verhindern, wonach das Pulver gebrannt und in Sinterkörper weiter verarbeitet wird.

**2.** Verfahren nach Anspruch 1, dadurch gekennzeichnet, daß die Metalle aus den Gruppen II bis IV, VIIB und VIII des Periodensystems gewählt werden.

**3.** Verfahren nach Anspruch 1 oder 2, dadurch gekennzeichnet, daß das Metall Zirkonium ist.

**4.** Verfahren nach Anspruch 1 oder 2, dadurch gekennzeichnet, daß das Metall Aluminium ist.

**5.** Verfahren nach Anspruch 1 und 3, dadurch gekennzeichnet, daß das hergestellte Pulver hauptsächlich Zirkoniumoxid ist.

**6.** Verfahren nach Anspruch 1 und 4, dadurch gekennzeichnet, daß das hergestellte Pulver hauptsächlich Aluminiumoxid ist.

**7.** Verfahren nach Anspruch 1, dadurch gekennzeichnet, daß das verwendete Lösungsmittel ein niederer Alkohol ist.

**8.** Verfahren nach Anspruch 1, dadurch gekennzeichnet, daß die Mischung von Metallhydroxiden und/oder -oxiden und Wasser und/oder organischem Lösungsmittel frei fließend ist.

**9.** Verfahren nach Anspruch 1, dadurch gekennzeichnet, daß die Mischung 10 bis 2000 g Metallhydroxid und/oder -oxid pro Liter Lösungsmittel enthält.

11

**10.** Verfahren nach Anspruch 1, dadurch gekennzeichnet, daß das Brennen des getrockneten Pulvers bei 500 bis 1500 °C durchgeführt wird.

**Revendications**

**1.** Procédé pour la production de poudres céramique devant être utilisées comme précurseur pour réaliser des corps frittés, lesquelles poudres céramique ont une taille particulaire submicronique et une faible tendance à former des agglomérats, caractérisé en ce que l'on chauffe une boue d'hydroxydes métalliques, d'oxydes métalliques et/ou leurs mélanges dans une quantité d'eau et de solvant qui dépasse le remplissage critique, jusqu'à une pression et une température qui dépassent le point critique du mélange, après quoi on réduit la pression à la pression atmosphérique tandis que la température est maintenue au-dessus de la température critique suffisamment longtemps pour empêcher la condensation du solvant dans l'autoclave, après quoi la poudre est calcinée et elle est traitée en corps frittés.

**2.** Procédé selon la revendication 1, caractérisé en ce que les métaux sont choisis parmi les Groupes II-VI, Groupes VIIB et VIII de la Classification Périodique des Eléments.

**3.** Procédé selon la revendication 1 ou 2, caractérisé en ce que le métal est du zirconium.

**4.** Procédé selon la revendication 1 ou 2, caractérisé en ce que le métal est de l'aluminium.

**5.** Procédé selon les revendications 1 et 3, caractérisé en ce que la poudre telle que produite est principalement de l'oxyde de zirconium.

**6.** Procédé selon les revendications 1 et 4, caractérisé en ce que la poudre telle que produite est de l'oxyde d'aluminium.

**7.** Procédé selon la revendication 1, caractérisé en ce que le solvant tel qu'utilisé est un alcool inférieur.

**8.** Procédé selon la revendication 1, caractérisé en ce que le mélange d'hydroxydes et/ou d'oxydes métalliques et d'eau et/ou de solvant organique s'écoule librement.

**9.** Procédé selon la revendication 1, caractérisé en ce que le mélange contient 10-2000 g d'hydroxyde et/ou d'oxyde métallique par litre de solvant.

**10.** Procédé selon la revendication 1, caractérisé en ce que la calcination de la poudre séchée s'effectue à 500-1500 °C.